# EUROPÄISCHE PATENTSCHRIFT

(11) **EP 4 779 381 B1**
(45) Veröffentlichungstag und Bekanntmachung des Hinweises auf die Patenterteilung: **21.10.2026**
(21) Anmeldenummer: 25152051.6
(22) Anmeldetag: 15.01.2025
(51) Int. Cl.: G02B 7/02, G01B 1/00, G01B 11/02

(54) **OPTISCHE ANORDNUNG UND KONFOKAL CHROMATISCHER ABSTANDSSENSOR**
OPTICAL ASSEMBLY AND CONFOCAL CHROMATIC DISTANCE SENSOR
ENSEMBLE OPTIQUE ET CAPTEUR DE DISTANCE CHROMATIQUE CONFOCAL

(43) Veröffentlichungstag der Anmeldung: 22.07.2026
(73) Patentinhaber: Klingelnberg GmbH, 42499 Hückeswagen (DE)
(72) Erfinder: Weber, Robin, 42499 Hückeswagen (DE); Bergen, Johann, 51702 Bergneustadt (DE); Thönes, Fabian, 50827 Köln (DE)
(74) Vertreter: Janke Scholl Patentanwälte PartG mbB

(56) Entgegenhaltungen:
- CN-B- 118 276 272
- US-A1- 20240 241 339
- US-A1- 20250 003 736

## Beschreibung

Die vorliegende Erfindung betrifft eine optische Anordnung sowie einen konfokal chromatischen Abstandssensor mit einer solchen optischen Anordnung.

Ein konfokal chromatischer Abstandssensor ist z.B. aus der Patentanmeldung mit der Veröffentlichungsschrift EP 3 611 463 A1 oder aus der Patentanmeldung mit der Veröffentlichungsschrift EP 3 786 573 A1 bekannt. Des Weiteren beschreibt US 2025/003736 A1 einen konfokal chromatischen Abstandssensor mit einem Messkopf. Der Messkopf umfasst ein metallisches Gehäuse, in welchem eine Vielzahl von Linsen angeordnet sind.

Optische Anordnungen dienen dazu, Licht gezielt zu leiten und/oder zu fokussieren. Beispielsweise kann eine optische Anordnung in der optischen Koordinatenmesstechnik dazu dienen, Messlicht eines konfokal chromatischen Abstandssensors in Richtung eines Messobjekts zu fokussieren und/oder von dem Messobjekt rückgestrahltes Licht in einen Lichtwellenleiter einzukoppeln, um das rückgestrahlte Licht spektral auszuwerten.

Um reproduzierbare Ergebnisse und eine hohe Messgenauigkeit zu erreichen, ist es wichtig, dass die axiale Position der jeweiligen optisch wirksamen Elemente, wie Linsen, Lichtwellenleiter oder dergleichen, entlang der optischen Achse der optischen Anordnung möglichst konstant bleibt, um die optische Abbildung nicht zu verfälschen.

Insbesondere für den Fall, dass die optische Anordnung nicht in einer präzise klimatisierten Messumgebung angeordnet ist, können Temperatureinflüsse eine thermische Dehnung eines die optisch wirksamen Elemente aufnehmenden Gehäuses bewirken, was zu Veränderungen der relativen axialen Positionen der optisch wirksamen Elemente entlang der optischen Achse führen kann. Dies kann die Qualität der optischen Abbildung beeinträchtigen und Messergebnisse verfälschen.

Vor diesem Hintergrund liegt der vorliegenden Erfindung die technische Problemstellung zugrunde, eine verbesserte optische Anordnung anzugeben, die insbesondere robust gegenüber Wärmeeinflüssen ist und, auf dem Gebiet der optischen Koordinatenmesstechnik, insbesondere auch außerhalb einer präzise klimatisierten Messumgebung reproduzierbare Ergebnisse mit hoher Messgenauigkeit ermöglicht. Weiter soll ein konfokal chromatischer Abstandssensor mit einem solchen optischen Anordnung angegeben werden.

Die voranstehend beschriebene, technische Problemstellung wird jeweils mit den Merkmalen der unabhängigen Ansprüche gelöst. Weitere Ausgestaltungen der Erfindung ergeben sich aus den abhängigen Ansprüchen und der nachstehenden Beschreibung.

Gemäß einem ersten Aspekt betrifft die Erfindung eine optische Anordnung, mit einer ersten Linse, mit einer zweiten Linse, mit einer Lichtwellenleiteraufnahme zum Anschließen eines Lichtwellenleiters, mit einem Gehäuse, innerhalb dessen die erste Linse, die zweite Linse und die Lichtwellenleiteraufnahme angeordnet sind, wobei zwischen der ersten Linse und der zweiten Linse ein erstes Distanzelement angeordnet ist, um einen entlang einer optischen Achse gemessenen, ersten axialen Abstand der ersten Linse zur zweiten Linse innerhalb des Gehäuses zu definieren, wobei zwischen der zweiten Linse und der Lichtwellenleiteraufnahme ein zweites Distanzelement angeordnet ist, um einen entlang der optischen Achse gemessenen, zweiten axialen Abstand der zweiten Linse zur Lichtwellenleiteraufnahme innerhalb des Gehäuses zu definieren, wobei zwischen einem mit dem Gehäuse verbundenen ersten axialen Anschlag und der ersten Linse auf einer der zweiten Linse abgewandten Seite der ersten Linse ein erstes federndes Ausgleichselement vorgesehen ist, wobei das erste Ausgleichselement federnd elastisch zwischen dem ersten axialen Anschlag und der ersten Linse vorgespannt ist, wobei zwischen einem mit dem Gehäuse verbundenen zweiten axialen Anschlag und der Lichtwellenleiteraufnahme auf einer der zweiten Linse abgewandten Seite der Lichtwellenleiteraufnahme ein zweites federndes Ausgleichselement vorgesehen ist, wobei das zweite Ausgleichselement federnd elastisch zwischen dem zweiten axialen Anschlag und der Lichtwellenleiteraufnahme vorgespannt ist, wobei das erste Distanzelement ein Material aufweist, das einen geringeren Wärmeausdehnungskoeffizienten aufweist als ein Material des Gehäuses und wobei das zweite Distanzelement ein Material aufweist, das einen geringeren Wärmeausdehnungskoeffizienten aufweist als das Material des Gehäuses.

Der Erfindung liegt die Idee zugrunde, die axiale Position der Linsen und der Lichtwellenleiteraufnahme von Temperaturdehnungen des Gehäuses zu entkoppeln, in dem die Linsen und der Lichtwellenleiter mithilfe von Distanzelementen, die geringere Wärmeausdehnungskoeffizienten aufweisen, axial positioniert werden. Mithilfe der federnd elastischen Ausgleichselemente kann sichergestellt werden, dass trotz etwaiger temperaturbedingter Längenänderungen des Gehäuses weiterhin eine zuverlässige Abstützung der Linsen und der Lichtwellenleiteraufnahme an den jeweiligen Anschlägen erfolgt, da die federnd elastisch vorgespannten Ausgleichselemente durch Ein- und Rückfedern Längenänderungen des Gehäuses ausgleichen können.

So kann eine zuverlässige axiale Positionierung der Linsen und der Lichtwellenleiteraufnahme auch unter einem äußeren Temperatureinfluss gewährleistet werden. Es wird daher eine verbesserte optische Anordnung angegeben, die insbesondere robust gegenüber äußeren Wärmeeinflüssen ist und, auf dem Gebiet der optischen Koordinatenmesstechnik, insbesondere auch außerhalb einer präzise klimatisierten Messumgebung, reproduzierbare Ergebnisse mit hoher Messgenauigkeit ermöglicht.

Das erste Distanzelement kann aus einem Material bestehen, das einen geringeren Wärmeausdehnungskoeffizienten aufweist als das Material des Gehäuses.

Das zweite Distanzelement kann aus einem Material bestehen, das einen geringeren Wärmeausdehnungskoeffizienten aufweist als das Material des Gehäuses.

Das erste Distanzelement kann eine kreiszylindrische Hülse sein.

Das zweite Distanzelement kann eine kreiszylindrische Hülse sein.

Es kann vorgesehen sein, dass das erste Distanzelement aus einem Verbundwerkstoff besteht, insbesondere aus einem Faserverbundwerkstoff besteht, wie einem kohlenstofffaserverstärkten Kunststoff oder dergleichen und/oder das zweite Distanzelement aus einem Verbundwerkstoff besteht, insbesondere aus einem Faserverbundwerkstoff besteht, wie einem kohlenstofffaserverstärkten Kunststoff oder dergleichen. Das erste Distanzelement kann ein gewickeltes CFK-Rohr sein. Die Abkürzung "CFK" steht für kohlefaserverstärkter Kunststoff.

Das erste Distanzelement kann einen axialen Wärmeausdehnungskoeffizienten aufweisen, der kleiner oder gleich 0,2*10⁻⁶ *1/K ist. Das erste Distanzelement kann einen axialen Wärmeausdehnungskoeffizienten aufweisen, der kleiner oder gleich 0,1*10⁻⁶*1/K ist.

Das erste Distanzelement kann einen axialen Wärmeausdehnungskoeffizienten aufweisen, der bis zu fünfmal geringer ist als ein axialer Wärmeausdehnungskoeffizient des Gehäuses. Das erste Distanzelement kann einen axialen Wärmeausdehnungskoeffizienten aufweisen, der bis zu zehnmal geringer ist als ein axialer Wärmeausdehnungskoeffizient des Gehäuses. Das erste Distanzelement kann einen axialen Wärmeausdehnungskoeffizienten aufweisen, der bis zu fünfzehnmal geringer ist als ein axialer Wärmeausdehnungskoeffizient des Gehäuses. Das erste Distanzelement kann einen axialen Wärmeausdehnungskoeffizienten aufweisen, der fünf- bis fünfzehnmal geringer ist als ein axialer Wärmeausdehnungskoeffizient des Gehäuses. Das erste Distanzelement kann einen axialen Wärmeausdehnungskoeffizienten aufweisen, der zehnmal geringer ist als ein axialer Wärmeausdehnungskoeffizient des Gehäuses.

Es kann vorgesehen sein, dass das zweite Distanzelement aus einem Verbundwerkstoff besteht, insbesondere aus einem Faserverbundwerkstoff besteht, wie einem kohlenstofffaserverstärkten Kunststoff oder dergleichen und/oder das zweite Distanzelement aus einem Verbundwerkstoff besteht, insbesondere aus einem Faserverbundwerkstoff besteht, wie einem kohlenstofffaserverstärkten Kunststoff oder dergleichen. Das zweite Distanzelement kann ein gewickeltes CFK-Rohr sein.

Das zweite Distanzelement kann einen axialen Wärmeausdehnungskoeffizienten aufweisen, der kleiner oder gleich 0,2*10⁻⁶ *1/K ist. Das zweite Distanzelement kann einen axialen Wärmeausdehnungskoeffizienten aufweisen, der kleiner oder gleich 0,1*10⁻⁶*1/K ist.

Das zweite Distanzelement kann einen axialen Wärmeausdehnungskoeffizienten aufweisen, der bis zu fünfmal geringer ist als ein axialer Wärmeausdehnungskoeffizient des Gehäuses. Das zweite Distanzelement kann einen axialen Wärmeausdehnungskoeffizienten aufweisen, der bis zu zehnmal geringer ist als ein axialer Wärmeausdehnungskoeffizient des Gehäuses. Das zweite Distanzelement kann einen axialen Wärmeausdehnungskoeffizienten aufweisen, der bis zu fünfzehnmal geringer ist als ein axialer Wärmeausdehnungskoeffizient des Gehäuses. Das zweite Distanzelement kann einen axialen Wärmeausdehnungskoeffizienten aufweisen, der fünf- bis fünfzehnmal geringer ist als ein axialer Wärmeausdehnungskoeffizient des Gehäuses. Das zweite Distanzelement kann einen axialen Wärmeausdehnungskoeffizienten aufweisen, der zehnmal geringer ist als ein axialer Wärmeausdehnungskoeffizient des Gehäuses.

Gemäß einer Ausgestaltung der optischen Anordnung kann vorgesehen sein, dass ein drittes Distanzelement vorgesehen ist, das zwischen der zweiten Linse und der Lichtwellenleiteraufnahme angeordnet ist, um zusammen mit dem zweiten Distanzelement den zweiten Abstand zwischen der zweiten Linse und der Lichtwellenleiteraufnahme innerhalb des Gehäuses zu definieren, wobei das dritte Distanzelement ein Material aufweist, das einen geringeren Wärmeausdehnungskoeffizienten aufweist als das Material des Gehäuses, wobei das dritte Distanzelement insbesondere aus einem Verbundwerkstoff besteht, insbesondere aus einem Faserverbundwerkstoff besteht, wie einem kohlenstofffaserverstärkten Kunststoff oder dergleichen. Das dritte Distanzelement kann ein gewickeltes CFK-Rohr sein.

Das dritte Distanzelement kann aus einem Material bestehen, das einen geringeren Wärmeausdehnungskoeffizienten aufweist als das Material des Gehäuses.

Das dritte Distanzelement kann eine kreiszylindrische Hülse sein.

Das dritte Distanzelement kann einen axialen Wärmeausdehnungskoeffizienten aufweisen, der kleiner oder gleich 0,2*10⁻⁶ *1/K ist. Das dritte Distanzelement kann einen axialen Wärmeausdehnungskoeffizienten aufweisen, der kleiner oder gleich 0,1*10⁻⁶*1/K ist.

Das dritte Distanzelement kann einen axialen Wärmeausdehnungskoeffizienten aufweisen, der bis zu fünfmal geringer ist als ein axialer Wärmeausdehnungskoeffizient des Gehäuses. Das dritte Distanzelement kann einen axialen Wärmeausdehnungskoeffizienten aufweisen, der bis zu zehnmal geringer ist als ein axialer Wärmeausdehnungskoeffizient des Gehäuses. Das dritte Distanzelement kann einen axialen Wärmeausdehnungskoeffizienten aufweisen, der bis zu fünfzehnmal geringer ist als ein axialer Wärmeausdehnungskoeffizient des Gehäuses. Das dritte Distanzelement kann einen axialen Wärmeausdehnungskoeffizienten aufweisen, der fünf- bis fünfzehnmal geringer ist als ein axialer Wärmeausdehnungskoeffizient des Gehäuses. Das dritte Distanzelement kann einen axialen Wärmeausdehnungskoeffizienten aufweisen, der zehnmal geringer ist als ein axialer Wärmeausdehnungskoeffizient des Gehäuses.

Das Material des Gehäuses kann einen axialen Wärmeausdehnungskoeffizienten aufweisen, der größer oder gleich 1*10⁻⁶*1/K ist.

Es kann vorgesehen sein, dass das zweite Distanzelement zwischen der zweiten Linse und einem Absatz des Gehäuses angeordnet ist und das dritte Distanzelement zwischen der Lichtwellenleiteraufnahme und dem Absatz des Gehäuses angeordnet ist.

Es kann vorgesehen sein, dass das das zweite Distanzelement an dem Absatz anliegt und die Lichtwellenleiteraufnahme an dem Absatz anliegt.

Es kann vorgesehen sein, dass die optische Anordnung genau zwei Distanzelemente aufweist.

Es kann vorgesehen sein, dass die optische Anordnung genau drei Distanzelemente aufweist.

Gemäß einer Ausgestaltung der optischen Anordnung kann vorgesehen sein, dass das Gehäuse einen ersten Abschnitt mit einem ersten Gehäusedurchmesser aufweist, innerhalb dessen die erste Linse und die zweite Linse angeordnet sind, und das Gehäuse einen zweiten Abschnitt mit einem zweiten Gehäusedurchmesser aufweist, innerhalb dessen die Lichtwellenleiteraufnahme angeordnet ist, wobei der erste Gehäusedurchmesser größer ist als der zweite Gehäusedurchmesser.

Es kann vorgesehen sein, dass der Absatz den Übergang zwischen dem ersten Abschnitt und dem zweiten Abschnitt ausbildet.

Gemäß einer Ausgestaltung der optischen Anordnung kann vorgesehen sein, dass der erste axiale Anschlag eine in das Gehäuse eingeschraubte Mutter ist.

Gemäß einer Ausgestaltung der optischen Anordnung kann vorgesehen sein, dass der zweite axiale Anschlag eine in das Gehäuse eingeschraubte Mutter ist.

Gemäß einer Ausgestaltung der optischen Anordnung kann vorgesehen sein, dass das erste Ausgleichselement ein elastisches Kunststoffbauteil ist, wie ein O-Ring oder dergleichen,

Gemäß einer Ausgestaltung der optischen Anordnung kann vorgesehen sein, dass das zweite Ausgleichselement ein elastisches Kunststoffbauteil ist, wie ein O-Ring oder dergleichen.

Es kann vorgesehen sein, dass das erste Ausgleichselement an der ersten Linse anliegt. Gemäß alternativer Ausgestaltungen kann vorgesehen sein, dass zwischen der ersten Linse und dem ersten Ausgleichselement ein Distanzelement bzw. ein Abstandshalter vorgesehen ist.

Es kann vorgesehen sein, dass das zweite Ausgleichselement an der Lichtwellenleiteraufnahme anliegt. Gemäß alternativer Ausgestaltungen kann vorgesehen sein, dass zwischen der Lichtwellenleiteraufnahme und dem zweiten Ausgleichselement ein Distanzelement bzw. ein Abstandshalter vorgesehen ist.

Es kann vorgesehen sein, dass das erste Distanzelement an der ersten Linse anliegt. Gemäß alternativer Ausgestaltungen kann vorgesehen sein, dass zwischen der ersten Linse und dem ersten Distanzelement ein weiteres Distanzelement bzw. ein Abstandshalter vorgesehen ist.

Es kann vorgesehen sein, dass das erste Distanzelement an der zweiten Linse anliegt. Gemäß alternativer Ausgestaltungen kann vorgesehen sein, dass zwischen der zweiten Linse und dem ersten Distanzelement ein weiteres Distanzelement bzw. ein Abstandshalter vorgesehen ist.

Es kann vorgesehen sein, dass das zweite Distanzelement an der zweiten Linse anliegt. Gemäß alternativer Ausgestaltungen kann vorgesehen sein, dass zwischen der zweiten Linse und dem zweiten Distanzelement ein weiteres Distanzelement bzw. ein Abstandshalter vorgesehen ist.

Es kann vorgesehen sein, dass mindestens ein Distanzelement an der Lichtwellenleiteraufnahme anliegt. Gemäß alternativer Ausgestaltungen kann vorgesehen sein, dass zwischen der Lichtwellenleiteraufnahme und einem zugeordneten Distanzelement ein weiteres Distanzelement bzw. ein Abstandshalter vorgesehen ist.

Es kann vorgesehen sein, dass das Gehäuse ein metallisches Material aufweist oder aus einem metallischen Material besteht, wie z.B. einem Stahlwerkstoff, einem Aluminiumwerkstoff oder dergleichen.

Es kann vorgesehen sein, dass das Material des Gehäuses einen Wärmeausdehnungskoeffizienten aufweist, der mehr als das Fünffache des Wärmeausdehnungskoeffizienten des Materials des ersten Distanzelements und/oder des zweiten Distanzelements beträgt, insbesondere einen Wärmeausdehnungskoeffizienten aufweist, der mehr als das Zehnfache des Wärmeausdehnungskoeffizienten des Materials des ersten Distanzelements und/oder des zweiten Distanzelements beträgt.

Gemäß einem zweiten Aspekt betrifft die Erfindung einen konfokal chromatischen Abstandssensor zur Abstandsmessung, mit einer Lichtquelle, mit einer optischen Anordnung, mit einem Lichtwellenleiter und mit einem Spektrometer, wobei die optische Anordnung mittels des Lichtwellenleiters mit dem Spektrometer verbunden ist und wobei die optische Anordnung dazu eingerichtet ist, von einem Messobjekt rückgestrahltes Licht in den Lichtwellenleiter zu fokussieren. Der Abstandssensor zeichnet sich dadurch aus, dass die optische Anordnung in erfindungsgemäßer Weise ausgebildet ist.

Es kann vorgesehen sein, das Gehäuse mittels einer Halterung an einer Tragstruktur befestigt ist, wobei die Halterung in axialer Richtung betrachtet einen Abstand zu der ersten Linse aufweist. Z.B. kann die Halterung in axialer Richtung betrachtet einen Abstand zu der ersten Linse aufweisen, dessen Betrag mehr als der Hälfe einer axialen Länge des Gehäuses entspricht.

Die Anordnung der Halterung mit einem Abstand zur ersten Linse hat den Vorteil, dass während der Messung eine Kollision mit einem Messobjekt verhindert werden kann, sofern Messbewegungen während der Messung ausgeführt werden.

Die Tragstruktur kann z.B. Teil einer CNC-gesteuerten Achse einer Koordinatenmessmaschine zur Verzahnungsmessung sein.

Die Kombination einer zur ersten Linse beanstandeten Halterung mit den temperaturstabilen Distanzelementen hat den Vorteil, dass die optische Anordnung mit einer axial frei auskragenden Gehäuselänge befestigt bzw. gegriffen werden kann, ohne dass diese Art der Befestigung durch Temperaturdehnungen des Gehäuses einen negativen Effekt auf das Messergebnis hat. Die Halterung, die für eine CNC-gesteuerte Koordinatenmessung eine Kollisionsstruktur während des Ausführens der Messbewegungen bildet, kann somit vom Messobjekt entfernt angeordnet werden, so dass mögliche Messbewegungen zwar durch das Gehäuse der optischen Anordnung, nicht jedoch durch die Halterung eingeschränkt werden.

Beispielsweise kann vorgesehen sein, dass die Halterung an dem Absatz des Gehäuses anliegt.

Nachfolgend wird die Erfindung anhand einer Ausführungsbeispiele darstellenden Zeichnung näher erläutert. Es zeigen jeweils schematisch:
- Fig. 1: eine erfindungsgemäße optische Anordnung in einem Teilschnitt;
- Fig. 2: eine weitere erfindungsgemäße optische Anordnung in einem Teilschnitt;
- Fig. 3: eine weitere erfindungsgemäße optische Anordnung in einem Teilschnitt;
- Fig. 4: eine erfindungsgemäßen konfokal chromatischen Abstandssensor zur Abstandsmessung.

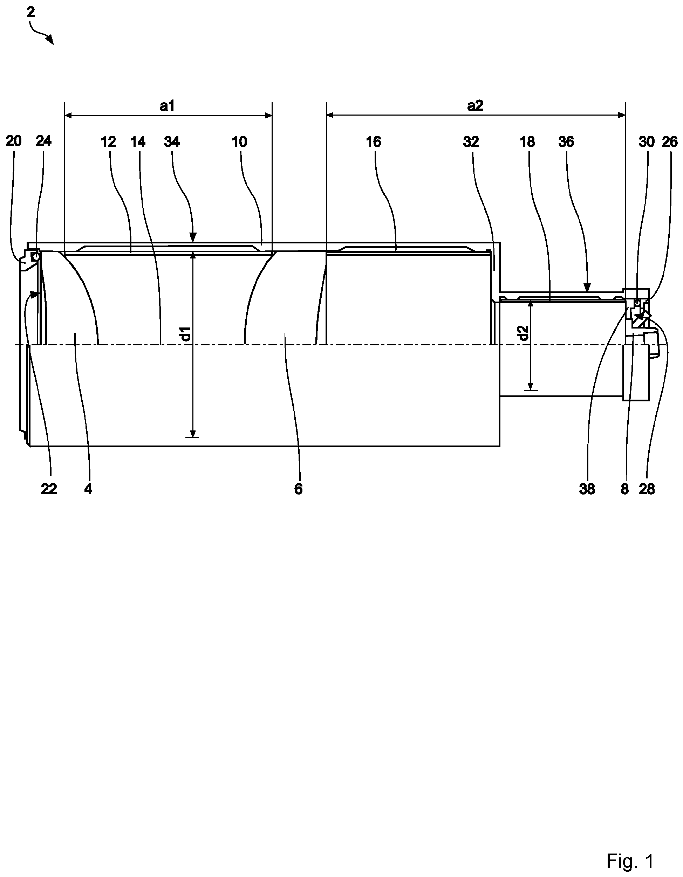

Fig 1 zeigt eine erfindungsgemäße optische Anordnung 2 in einem Teilschnitt.

Die optische Anordnung 2 hat eine erste Linse 4 und eine zweite Linse 6.

Die optische Anordnung 2 hat eine Lichtwellenleiteraufnahme 8 zum Anschließen eines Lichtwellenleiters.

Die optische Anordnung 2 hat ein Gehäuse 10. Innerhalb des Gehäuses 10 sind die erste Linse 4 und die zweite Linse 6 angeordnet.

Zwischen der ersten Linse 4 und der zweiten Linse 6 ist ein erstes Distanzelement 12 angeordnet. Das Distanzelement 12 dient dazu, einen entlang einer optischen Achse 14 gemessenen, ersten axialen Abstand a1 der ersten Linse 4 zur zweiten Linse 6 innerhalb des Gehäuses 10 zu definieren.

Zwischen der zweiten Linse 6 und der Lichtwellenleiteraufnahme 8 sind ein zweites Distanzelement 16 und ein drittes Distanzelement 18 angeordnet. Das zweite Distanzelement 16 und das dritte Distanzelement 18 dienen dazu, einen entlang der optischen Achse 14 gemessenen, zweiten axialen Abstand a2 der zweiten Linse 6 zur Lichtwellenleiteraufnahme 8 innerhalb des Gehäuses 10 zu definieren.

Zwischen einem mit dem Gehäuse 10 verbundenen ersten axialen Anschlag 20 und der ersten Linse 4 ist auf einer der zweiten Linse 6 abgewandten Seite 22 der ersten Linse 4 ein erstes federndes Ausgleichselement 24 vorgesehen. Das erste federnde Ausgleichselement 24 ist federnd elastisch zwischen dem ersten axialen Anschlag 20 und der ersten Linse 4 vorgespannt. Das erste Ausgleichselement 24 weist einen Kunststoff auf.

Zwischen einem mit dem Gehäuse 10 verbundenen zweiten axialen Anschlag 26 und der Lichtwellenleiteraufnahme 8 ist auf einer der zweiten Linse abgewandten Seite 28 der Lichtwellenleiteraufnahme 8 ein zweites federndes Ausgleichselement 30 vorgesehen. Das zweite Ausgleichselement 30 ist federnd elastisch zwischen dem zweiten axialen Anschlag 26 und der Lichtwellenleiteraufnahme 8 vorgespannt. Das zweite Ausgleichselement 30 weist einen Kunststoff auf.

Das erste Distanzelement 12 besteht aus einem Material, das einen geringeren Wärmeausdehnungskoeffizienten aufweist als ein Material des Gehäuses 10. Das zweite Distanzelement 16 besteht aus einem Material, das einen geringeren Wärmeausdehnungskoeffizienten aufweist als das Material des Gehäuses 10. Das dritte Distanzelement 18 besteht aus einem Material, das einen geringeren Wärmeausdehnungskoeffizienten aufweist als das Material des Gehäuses 10.

Das erste Distanzelement 12, das zweite Distanzelement 16 und das dritte Distanzelement 18 bestehen jeweils aus einem Faserverbundwerkstoff. Das erste Distanzelement 12, das zweite Distanzelement 16 und das dritte Distanzelement 18 sind jeweils als gewickeltes CFK-Rohr ausgebildet.

Das zweite Distanzelement 16 ist zwischen der zweiten Linse 6 und einem Absatz 32 des Gehäuses 10 angeordnet. Das dritte Distanzelement 18 ist zwischen der Lichtwellenleiteraufnahme 8 und dem Absatz 32 des Gehäuses 10 angeordnet. Der Absatz 32 dient als Befestigungsbereich, wobei die optische Anordnung 2 im montierten Zustand im Bereich des Absatzes 32 befestigt ist, insbesondere eingespannt ist.

Das Gehäuse 10 weist einen ersten Abschnitt 34 mit einem ersten Gehäusedurchmesser d1 auf, innerhalb dessen die erste 4 Linse und die zweite Linse 6 angeordnet sind. Das Gehäuse 10 weist einen zweiten Abschnitt 36 mit einem zweiten Gehäusedurchmesser d2 auf, innerhalb dessen die Lichtwellenleiteraufnahme 8 angeordnet ist. Der erste Gehäusedurchmesser d1 ist größer als der zweite Gehäusedurchmesser d2.

Der Absatz 32 bildet einen Übergang zwischen dem ersten Abschnitt 34 und dem zweiten Abschnitt 36 des Gehäuses 10 aus.

Der erste axiale Anschlag 20 ist eine in das Gehäuse 10 eingeschraubte Mutter.

Der zweite axiale Anschlag 26 ist eine in das Gehäuse 10 eingeschraubte Mutter.

Das erste Ausgleichselement 24 ist ein elastisches Kunststoffbauteil, und zwar ein O-Ring.

Das zweite Ausgleichselement 30 ist ein elastisches Kunststoffbauteil, und zwar ein O-Ring.

Das erste Ausgleichselement 24 liegt an der ersten Linse 4 an. Gemäß alternativer Ausführungsbeispiele kann vorgesehen sein, dass zwischen der ersten Linse 4 und dem ersten Ausgleichselement 24 ein Distanzelement bzw. Abstandshalter vorgesehen ist.

Das zweite Ausgleichselement 30 liegt an der Lichtwellenleiteraufnahme 8. Ein in Fig. 1 gezeigter Kragen 38 ist Teil der Lichtwellenleiteraufnahme 8. Gemäß alternativer Ausführungsbeispiele kann vorgesehen sein, dass zwischen der Lichtwellenleiteraufnahme 8 und dem zweiten Ausgleichselement 30 ein Distanzelement bzw. Abstandshalter vorgesehen ist.

Das erste Distanzelement 12 liegt an der ersten Linse 4 an. Gemäß alternativer Ausführungsbeispiele kann vorgesehen sein, dass zwischen der ersten Linse 4 und dem ersten Distanzelement 12 ein weiteres Distanzelement bzw. Abstandshalter vorgesehen ist.

Das erste Distanzelement 12 liegt an der zweiten Linse 6 an. Gemäß alternativer Ausführungsbeispiele kann vorgesehen sein, dass zwischen der zweiten Linse 6 und dem ersten Distanzelement 12 ein weiteres Distanzelement bzw. ein Abstandshalter vorgesehen ist.

Das zweite Distanzelement 16 liegt an der zweiten Linse 6 an. Gemäß alternativer Ausführungsbeispiele kann vorgesehen sein, dass zwischen der zweiten Linse 6 und dem zweite Distanzelement 16 ein weiteres Distanzelement bzw. ein Abstandshalter vorgesehen ist.

Das dritte Distanzelement 18 liegt an der Lichtwellenleiteraufnahme 8 an. Gemäß alternativer Ausführungsbeispiele kann vorgesehen sein, dass zwischen der Lichtwellenleiteraufnahme 8 und dem dritten Distanzelement 18 ein weiteres Distanzelement bzw. ein Abstandshalter vorgesehen ist. Gemäß alternativer Ausführungsbeispiele kann vorgesehen sein, dass kein drittes Distanzelement 18 vorgesehen ist, sondern dass das zweite Distanzelement 16 an der Lichtwellenleiteraufnahme 8 anliegt.

Das Gehäuse 10 weist ein metallisches Material auf, wobei das Material des Gehäuses einen Wärmeausdehnungskoeffizienten hat, der dem Zehnfachen des Wärmeausdehnungskoeffizienten des Materials der Distanzelemente 12, 16, 18 entspricht.

Die Linsen 4, 6 und die Lichtwellenleiteraufnahme 8 sind axial in das Gehäuse 10 eingeschoben, jedoch nicht mit dem Gehäuse 10 verbunden. Sofern sich das Gehäuse 10 erwärmt und infolge der Erwärmung eine axiale Längenausdehnung erfährt, verbleiben die Linsen 4, 6 und die Lichtwellenleiteraufnahme 8 in axialer Richtung relativ zueinander in derselben Position. Denn die Ausgleichselemente 24, 30 gleichen die axiale Längenausdehnung des Gehäuses 10 infolge ihrer federnd elastischen Vorspannung aus, so dass weiterhin eine axiale Fixierung gegeben ist. Die Längenausdehnung der Distanzelemente 12, 16, 18 ist aufgrund ihrer geringen Wärmeausdehnungskoeffizienten vernachlässigbar. So kann eine temperaturstabile axiale Anordnung der Linsen 4, 6 und der Lichtwellenleiteraufnahme 8 mit im Wesentlichen konstanten axialen Abständen a1, a2 angegeben werden.

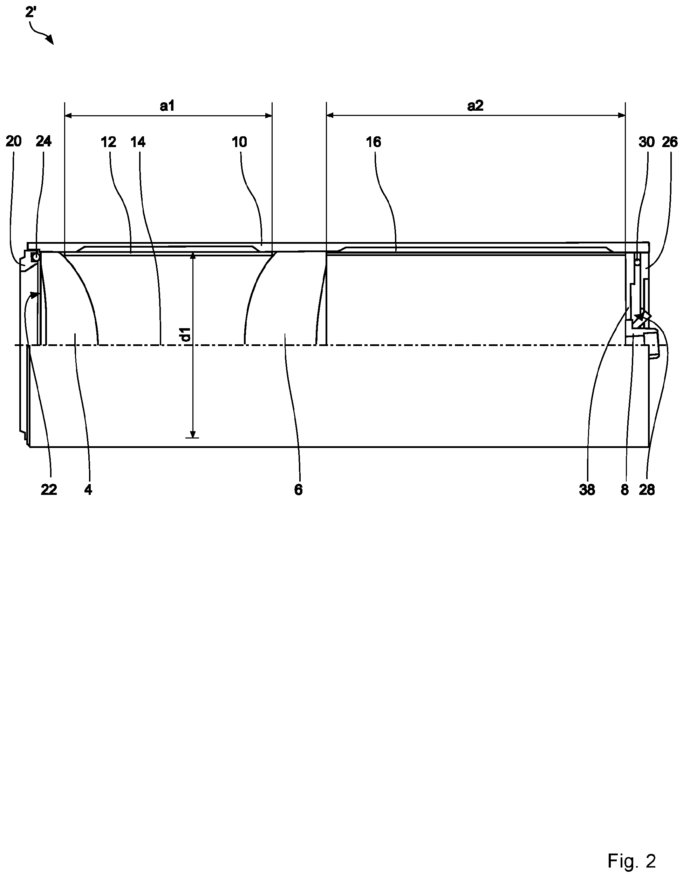

Fig. 2 zeigt eine weitere Ausgestaltung einer erfindungsgemäßen optische Anordnung 2' in einem Teilschnitt. Zur Vermeidung von Wiederholungen wird lediglich auf die Unterschiede zu dem voranstehend beschriebenen Ausführungsbeispiel eingegangen, wobei gleichen Merkmalen gleiche Bezugszeichen zugeordnet werden.

Die optische Anordnung 2' weist lediglich zwei Distanzelemente 12, 16 auf und hat einen durchgehend konstanten Gehäusedurchmesser d1. Der Kragen 38 der Lichtwellenleiteraufnahme 8 ist dem Gehäusedurchmesser d1 entsprechend dimensioniert. Die optische Anordnung 2' hat keinen Absatz 32, so dass die zweite Linse 6 und die Lichtwellenleiteraufnahme 8 unmittelbar am zweiten Distanzelement 16 anliegen.

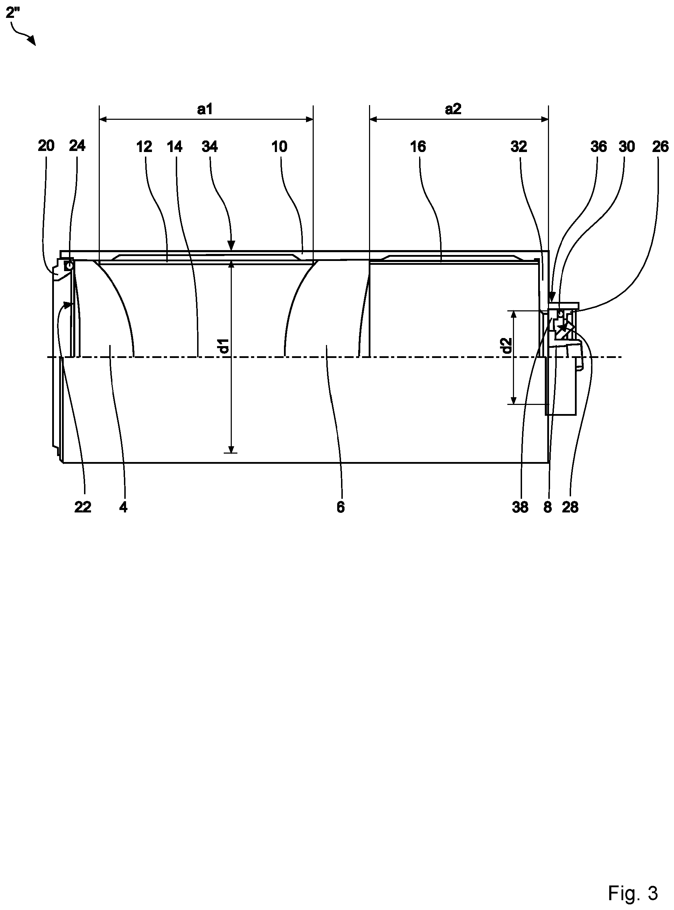

Fig. 3 zeigt eine weitere Ausgestaltung einer erfindungsgemäßen optische Anordnung 2" in einem Teilschnitt. Zur Vermeidung von Wiederholungen wird lediglich auf die Unterschiede zu dem voranstehend beschriebenen Ausführungsbeispiel eingegangen, wobei gleichen Merkmalen gleiche Bezugszeichen zugeordnet werden.

Die optische Anordnung 2" weist lediglich zwei Distanzelemente 12, 16 auf, hat jedoch dennoch den Absatz 32 und die beiden Gehäuseabschnitte 34, 36 mit ihren unterschiedlichen Durchmessern d1, d2. Die Lichtwellenleiteraufnahme 8 liegt mit ihrem Kragen 38 unmittelbar an dem Absatz 32 an.

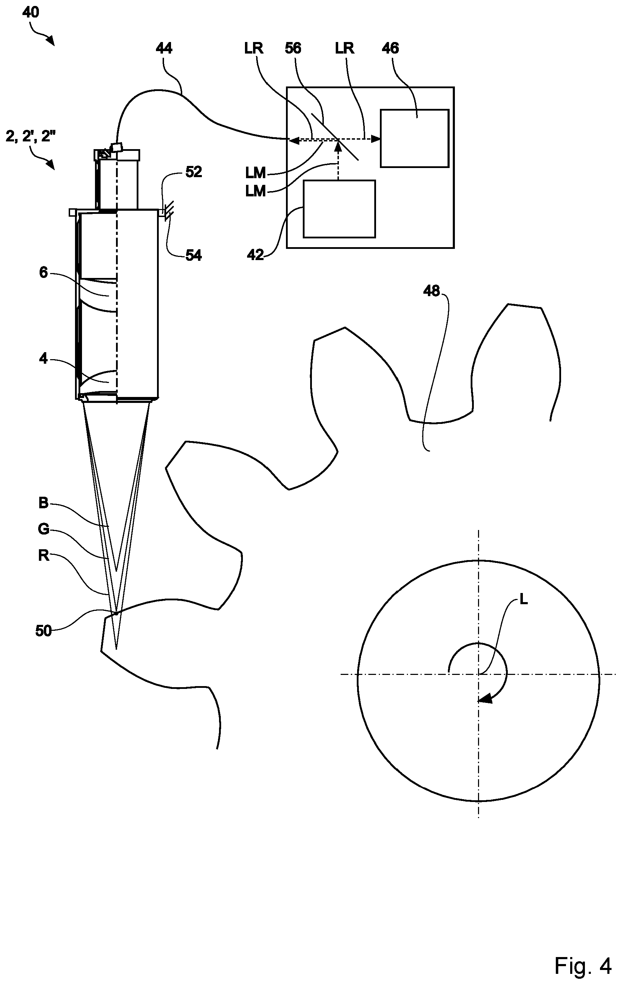

Fig. 4 zeigt einen konfokal chromatischer Abstandssensor 40 zur Abstandsmessung, mit einer Lichtquelle 42, mit einer optischen Anordnung 2 gemäß Fig. 1 oder einer optischen Anordnung 2' gemäß Fig. 2 oder einer optischen Anordnung 2" gemäß Fig. 3. Der konfokal chromatische Abstandssensor 40 hat einen Lichtwellenleiter 44 und ein Spektrometer 46, wobei die optische Anordnung 2 mittels des Lichtwellenleiters 44 mit dem Spektrometer 46 und der Lichtquelle 42 verbunden ist.

Die optische Anordnung 2, 2', 2" ist dazu eingerichtet, von der Lichtquelle 42 erzeugtes Messlicht LM in Richtung eines Messobjekts 48 auszubringen und von dem Messobjekt 48 rückgestrahltes Licht LR in den Lichtwellenleiter 44 zu fokussieren. Während der Messung kann das Messobjekt 48 um seine Längsachse L rotiert werden, um einen Messweg abzufahren.

Eine Abstandsmessung mit dem konfokal chromatischen Abstandssensor 40 funktioniert derart, dass mittels der Lichtquelle 42 erzeugtes Messlicht LM in Richtung des Messobjekts 48 fokussiert wird. Nach dem Durchlaufen der Linsen 4, 6 werden die verschiedenen Lichtfarben bzw. Wellenlängen B, G, R des Messlichts LM in verschiedenen Abständen zur optischen Anordnung 2, 2', 2" fokussiert. D.h. Lichtanteile gemäß der Wellenlängen B (blau), G (grün), R (rot) werden mit unterschiedlichem, bekanntem Abstand zur optischen Anordnung 2, 2', 2" fokussiert.

Anhand der Intensitäten der Lichtfarben des vom Bauteil 4 zurückgestrahlten Lichts LR, die mittels des Spektrometers 46 erfasst werden, kann auf den Abstand eines Messpunkts 50 zur optischen Anordnung 2 geschlossen werden. Mit anderen Worten kann durch eine spektrale Auswertung des rückgestrahlten Lichts LR mittels des Spektrometers 46 des konfokal chromatischen Abstandssensors 40 auf die Position des optisch erfassten Messpunkts 50 geschlossen werden. Der konfokal chromatische Abstandssensor 40 nutzt daher die chromatische Aberration der optischen Anordnung 2, 2', 2" zur Abstandsmessung.

Zwischen der Lichtquelle 42, dem Spektrometer 46 und dem Lichtwellenleiter 44 ist ein Strahlteiler 56 angeordnet, um Messlicht LM der Lichtquelle 42 in Richtung des Lichtwellenleiters 44 zu leiten und zurückgestrahltes Licht LR in Richtung des Spektrometers 46 zu leiten.

Der Strahlteiler 56 kann z.B. eine oder mehrere der folgenden Komponenten/Elemente aufweisen: Strahlteilerplatte (z.B. ein halbdurchlässiger Spiegel oder eine beschichtetes (Glas-)Substrat), Strahlteilerwürfel (z.B. aus zwei zusammengefügten Prismen), Prismenstrahlteiler, Polka-Dot-Strahlteiler, Pellicle-Strahlteiler, Reflexionsstrahlteiler, Gitter-Strahlteiler, Fiber-optischer Strahlteiler, Wellenleiter-Strahlteiler.

Der konfokal chromatische Abstandssensor 40 ist mittels einer Halterung 52 an einer Tragstruktur 54 befestigt. Die Tragstruktur 54 kann z.B. Teil einer CNC-gesteuerten Achse einer Koordinatenmessmaschine zur Verzahnungsmessung sein.

Die Halterung 52 weist in axialer Richtung betrachtet einen Abstand zu der ersten Linse 4 auf. Für alle Ausführungsbeispiele gilt, dass die erste Linse 4 messobjektseitig angeordnet ist und dass die zweite Linse 6 sensorseitig angeordnet ist. Die Anordnung der Halterung 52 mit einem axialen Abstand zur ersten Linse 4 hat den Vorteil, dass während der Messung eine Kollision der Halterung 52 mit dem Messobjekt 48 verhindert werden kann.

Für den Fall, dass die optische Anordnung des Abstandssensors 40 als optische Anordnung 2 gemäß Fig. 1 ausgebildet ist, liegt die Halterung 52 an dem Absatz 32 an. Die Distanzelemente 12, 16, 18 stellen sicher, dass eine thermisch bedingte axiale Gehäuselängung keinen Einfluss auf die relative Lage der Linsen 4, 6 und der Lichtwellenleiteraufnahme 8 zueinander und zur Halterung 52 hat.

## Patentansprüche

1. Optische Anordnung,
- mit einer ersten Linse (4), mit einer zweiten Linse (6), mit einer Lichtwellenleiteraufnahme (8) zum Anschließen eines Lichtwellenleiters (44) und mit einem Gehäuse (10), innerhalb dessen die erste Linse (4), die zweite Linse (6) und die Lichtwellenleiteraufnahme (8) angeordnet sind,
- wobei zwischen der ersten Linse (4) und der zweiten Linse (6) ein erstes Distanzelement (12) angeordnet ist, um einen entlang einer optischen Achse (14) gemessenen, ersten axialen Abstand (a1) der ersten Linse (4) zur zweiten Linse (6) innerhalb des Gehäuses (10) zu definieren,
- wobei zwischen der zweiten Linse (6) und der Lichtwellenleiteraufnahme (8) ein zweites Distanzelement (16) angeordnet ist, um einen entlang der optischen Achse gemessenen, zweiten axialen Abstand (a2) der zweiten Linse (6) zur Lichtwellenleiteraufnahme (8) innerhalb des Gehäuses (10) zu definieren,
- wobei zwischen einem mit dem Gehäuse (10) verbundenen ersten axialen Anschlag (20) und der ersten Linse (4) auf einer der zweiten Linse (6) abgewandten Seite (22) der ersten Linse (4) ein erstes federndes Ausgleichselement (24) vorgesehen ist, wobei das erste Ausgleichselement (24) federnd elastisch zwischen dem ersten axialen Anschlag (20) und der ersten Linse (4) vorgespannt ist,
- wobei zwischen einem mit dem Gehäuse (10) verbundenen zweiten axialen Anschlag (26) und der Lichtwellenleiteraufnahme (8) auf einer der zweiten Linse (6) abgewandten Seite (28) der Lichtwellenleiteraufnahme (8) ein zweites federndes Ausgleichselement (30) vorgesehen ist, wobei das zweite Ausgleichselement (30) federnd elastisch zwischen dem zweiten axialen Anschlag (26) und der Lichtwellenleiteraufnahme (8) vorgespannt ist,
- wobei das erste Distanzelement (12) ein Material aufweist, das einen geringeren Wärmeausdehnungskoeffizienten aufweist als ein Material des Gehäuses (10) und
- wobei das zweite Distanzelement (16) ein Material aufweist, das einen geringeren Wärmeausdehnungskoeffizienten aufweist als das Material des Gehäuses (10).

2. Optische Anordnung nach Anspruch 1,
**dadurch gekennzeichnet, dass**
das erste Distanzelement (12) einen aus einem Verbundwerkstoff besteht, insbesondere aus einem Faserverbundwerkstoff besteht, wie einem kohlenstofffaserverstärkten Kunststoff oder dergleichen und/oder
das zweite Distanzelement (16) aus einem Verbundwerkstoff besteht, insbesondere aus einem Faserverbundwerkstoff besteht, wie einem kohlenstofffaserverstärkten Kunststoff oder dergleichen.

3. Optische Anordnung nach Anspruch 1 oder Anspruch 2,
**dadurch gekennzeichnet, dass**
ein drittes Distanzelement (18) vorgesehen ist, das zwischen der zweiten Linse (6) und der Lichtwellenleiteraufnahme (8) angeordnet ist, um zusammen mit dem zweiten Distanzelement (16) den zweiten Abstand (a2) zwischen der zweiten Linse (6) und der Lichtwellenleiteraufnahme (8) innerhalb des Gehäuses (10) zu definieren, wobei das dritte Distanzelement (18) ein Material aufweist, das einen geringeren Wärmeausdehnungskoeffizienten aufweist als das Material des Gehäuses (10), wobei das dritte Distanzelement (18) insbesondere aus einem Verbundwerkstoff besteht, insbesondere aus einem Faserverbundwerkstoff besteht, wie einem kohlenstofffaserverstärkten Kunststoff oder dergleichen.

4. Optische Anordnung nach Anspruch 3,
**dadurch gekennzeichnet, dass**
das zweite Distanzelement (16) zwischen der zweiten Linse (6) und einem Absatz (32) des Gehäuses (10) angeordnet ist und das dritte Distanzelement (18) zwischen der Lichtwellenleiteraufnahme (8) und dem Absatz (32) des Gehäuses (10) angeordnet ist.

5. Optische Anordnung nach einem der voranstehenden Ansprüche,
**dadurch gekennzeichnet, dass**
das Gehäuse (10) einen ersten Abschnitt (34) mit einem ersten Gehäusedurchmesser (d1) aufweist, innerhalb dessen die erste Linse (4) und die zweite Linse (6) angeordnet sind, und das Gehäuse (10) einen zweiten Abschnitt (36) mit einem zweiten Gehäusedurchmesser (d2) aufweist, innerhalb dessen die Lichtwellenleiteraufnahme (8) angeordnet ist, wobei der erste Gehäusedurchmesser (d1) größer ist als der zweite Gehäusedurchmesser (d2).

6. Optische Anordnung nach Anspruch 4 und Anspruch 5,
**dadurch gekennzeichnet, dass**
der Absatz (32) den Übergang zwischen dem ersten Abschnitt (34) und dem zweiten Abschnitt (36) ausbildet.

7. Optische Anordnung nach einem der voranstehenden Ansprüche,
**dadurch gekennzeichnet, dass**
der erste axiale Anschlag (20) eine in das Gehäuse (10) eingeschraubte Mutter ist. und/oder
der zweite axiale Anschlag (26) eine in das Gehäuse eingeschraubte Mutter ist. und/oder
das erste Ausgleichselement (24) ein elastisches Kunststoffbauteil ist, wie ein O-Ring oder dergleichen,
und/oder
das zweite Ausgleichselement (30) ein elastisches Kunststoffbauteil ist, wie ein O-Ring oder dergleichen.

8. Optische Anordnung nach einem der voranstehenden Ansprüche,
**dadurch gekennzeichnet, dass**
das erste Ausgleichselement (20) an der ersten Linse (4) anliegt und/oder
das zweite Ausgleichselement (30) an der Lichtwellenleiteraufnahme (8) anliegt, und/oder
das erste Distanzelement (12) an der ersten Linse (4) anliegt und/oder
das erste Distanzelement (12) an der zweiten Linse (6) anliegt und/oder
das zweite Distanzelement (16) an der zweiten Linse (6) anliegt und/oder
mindestens ein Distanzelement (16, 18) an der Lichtwellenleiteraufnahme (8) anliegt.

9. Optische Anordnung nach einem der voranstehenden Ansprüche,
**dadurch gekennzeichnet, dass**
das Gehäuse (10) ein metallisches Material aufweist oder aus einem metallischen Material besteht
und/oder
das Material des Gehäuses (10) einen Wärmeausdehnungskoeffizienten aufweist der mehr als das Fünffache des Wärmeausdehnungskoeffizienten des Materials des ersten Distanzelements (12) und/oder des zweiten Distanzelements (16) beträgt.

10. Konfokal chromatischer Abstandssensor zur Abstandsmessung,
mit einer Lichtquelle (42),
mit einer optischen Anordnung (2, 2', 2"),
mit einem Lichtwellenleiter (44),
mit einem Spektrometer (46),
wobei die optische Anordnung (2, 2', 2") mittels des Lichtwellenleiters (44) mit dem Spektrometer (46) verbunden ist,
wobei die optische Anordnung (2, 2', 2") dazu eingerichtet ist, von einem Messobjekt (48) rückgestrahltes Licht in den Lichtwellenleiter (44) zu fokussieren,
**dadurch gekennzeichnet, dass**
die optische Anordnung (2, 2', 2") gemäß einem der voranstehenden Ansprüche 1 - 9 ausgebildet ist.

11. Konfokal chromatischer Abstandssensor nach Anspruch 10,
**dadurch gekennzeichnet, dass**
das Gehäuse (10) mittels einer Halterung (52) an einer Tragstruktur (54) befestigt werden kann,
wobei die Halterung (52) in axialer Richtung betrachtet einen Abstand zu der ersten Linse (4) aufweist.

12. Konfokal chromatischer Abstandssensor nach Anspruch 11,
wobei die optische Anordnung nach Anspruch 5 oder nach Anspruch 6 ausgebildet ist, **dadurch gekennzeichnet, dass** die Halterung (52) an dem Absatz (32) anliegt.

## Claims

1. Optical arrangement,
- having a first lens (4), having a second lens (6), having an optical fiber holder (8) for connecting an optical fiber (44), and having a housing (10) inside which the first lens (4), the second lens (6), and the optical fiber holder (8) are arranged,
- wherein a first spacer element (12) is arranged between the first lens (4) and the second lens (6) to define a first axial distance (a1) between the first lens (4) and the second lens (6) measured along an optical axis (14) within the housing (10),
- wherein a second spacer element (16) is arranged between the second lens (6) and the optical fiber holder (8) in order to define a second axial distance (a2) between the second lens (6) and the optical fiber holder (8) measured along the optical axis within the housing (10),
- wherein a first resilient compensating element (24) is provided between a first axial stop (20) connected to the housing (10) and the first lens (4) on a side (22) of the first lens (4) facing away from the second lens (6), wherein the first compensating element (24) is resiliently elastically pretensioned between the first axial stop (20) and the first lens (4),
- wherein a second resilient compensating element (30) is provided between a second axial stop (26) connected to the housing (10) and the optical fiber holder (8) on a side (28) of the optical fiber holder (8) facing away from the second lens (6), wherein the second compensating element (30) is resiliently elastically pretensioned between the second axial stop (26) and the optical fiber holder (8),
- wherein the first spacer element (12) comprises a material having a lower thermal expansion coefficient than a material of the housing (10), and
- wherein the second spacer element (16) comprises a material having a lower thermal expansion coefficient than the material of the housing (10).

2. Optical arrangement according to claim 1,
**characterized in that**
the first spacer element (12) consists of a composite material, in particular a fiber composite material, such as a carbon fiber reinforced plastic or the like, and/or the second spacer element (16) consists of a composite material, in particular a fiber composite material, such as a carbon fiber-reinforced plastic or the like.

3. Optical arrangement according to claim 1 or claim 2,
**characterized in that**
a third spacer element (18) is provided, which is arranged between the second lens (6) and the optical fiber holder (8) in order to define, together with the second spacer element (16), the second distance (a2) between the second lens (6) and the optical fiber holder (8) within the housing (10), wherein the third spacer element (18) comprises a material that has a lower thermal expansion coefficient than the material of the housing (10),
wherein the third spacer element (18) consists in particular of a composite material, in particular a fiber composite material, such as a carbon fiber reinforced plastic or the like.

4. Optical arrangement according to claim 3,
**characterized in that**
the second spacer element (16) is arranged between the second lens (6) and a shoulder (32) of the housing (10), and the third spacer element (18) is arranged between the optical fiber holder (8) and the shoulder (32) of the housing (10).

5. Optical arrangement according to one of the preceding claims,
**characterized in that**
the housing (10) has a first section (34) with a first housing diameter (d1), within which the first lens (4) and the second lens (6) are arranged, and the housing (10) has a second section (36) with a second housing diameter (d2), within which the optical fiber holder (8) is arranged, wherein the first housing diameter (d1) is larger than the second housing diameter (d2).

6. Optical arrangement according to claim 4 and claim 5,
**characterized in that**
the shoulder (32) forms the transition between the first section (34) and the second section (36).

7. Optical arrangement according to one of the preceding claims,
**characterized in that**
the first axial stop (20) is a nut screwed into the housing (10),
and/or
the second axial stop (26) is a nut screwed into the housing,
and/or
the first compensating element (24) is an elastic plastic component, such as an O-ring or the like,
and/or
the second compensating element (30) is an elastic plastic component, such as an O-ring or the like.

8. Optical arrangement according to one of the preceding claims,
**characterized in that**
the first compensating element (20) rests against the first lens (4),
and/or
the second compensating element (30) rests against the optical fiber holder (8), and/or
the first spacer element (12) rests against the first lens (4)
and/or
the first spacer element (12) rests against the second lens (6)
and/or
the second spacer element (16) rests against the second lens (6)
and/or
at least one spacer element (16, 18) rests against the optical fiber holder (8).

9. Optical arrangement according to one of the preceding claims,
**characterized in that**
the housing (10) comprises a metallic material or consists of a metallic material, and/or
the material of the housing (10) has a thermal expansion coefficient that is more than five times the thermal expansion coefficient of the material of the first spacer element (12) and/or the second spacer element (16).

10. Confocal chromatic distance sensor for distance measurement,
having a light source (42),
having an optical arrangement (2, 2', 2''),
having an optical fiber (44),
having a spectrometer (46),
wherein the optical arrangement (2, 2', 2'') is connected to the spectrometer (46) by means of the optical fiber (44),
wherein the optical arrangement (2, 2', 2'') is designed to focus light reflected from a measurement object (48) into the optical fiber (44),
**characterized in that**
the optical arrangement (2, 2', 2'') is designed in accordance with one of the preceding claims 1-9.

11. Confocal chromatic distance sensor according to claim 10,
**characterized in that**
the housing (10) can be attached to a support structure (54) by means of a bracket (52), wherein the bracket (52) is spaced apart from the first lens (4), viewed in the axial direction.

12. Confocal chromatic distance sensor according to claim 11,
wherein the optical arrangement is designed according to claim 5 or claim 6, **characterized in that** the bracket (52) rests against the shoulder (32).

## Revendications

1. Dispositif optique,
- comprenant une première lentille (4), une deuxième lentille (6), un support de fibre optique (8) destiné à raccorder une fibre optique (44), et un boîtier (10) à l'intérieur duquel sont disposés la première lentille (4), la deuxième lentille (6) et le support de fibre optique (8),
- dans lequel un premier élément d'écartement (12) est disposé entre la première lentille (4) et la deuxième lentille (6) afin de définir une première distance axiale (a1) entre la première lentille (4) et la deuxième lentille (6), mesurée le long d'un axe optique (14) à l'intérieur du boîtier (10),
- dans lequel un deuxième élément d'écartement (16) est disposé entre la deuxième lentille (6) et le support de fibre optique (8) afin de définir une deuxième distance axiale (a2) entre la deuxième lentille (6) et le support de fibre optique (8), mesurée le long de l'axe optique à l'intérieur du boîtier (10),
- dans lequel un premier élément de compensation élastique (24) est prévu entre une première butée axiale (20) reliée au boîtier (10) et la première lentille (4), sur un côté (22) de la première lentille (4) opposé à la deuxième lentille (6), dans lequel le premier élément de compensation (24) est précontraint de manière élastique entre la première butée axiale (20) et la première lentille (4),
- dans lequel un deuxième élément de compensation élastique (30) est prévu entre une deuxième butée axiale (26) reliée au boîtier (10) et le support de fibre optique (8), sur un côté (28) du support de fibre optique (8) opposé à la deuxième lentille (6), le deuxième élément de compensation (30) étant précontraint de manière élastique entre la deuxième butée axiale (26) et le support de fibre optique (8),
- dans lequel le premier élément d'écartement (12) comprend un matériau présentant un coefficient de dilatation thermique inférieur à celui du matériau du boîtier (10), et
- dans lequel le deuxième élément d'écartement (16) comprend un matériau présentant un coefficient de dilatation thermique inférieur à celui du matériau du boîtier (10).

2. Dispositif optique selon la revendication 1,
**caractérisé en ce que**
le premier élément d'écartement (12) est constitué d'un matériau composite, en particulier d'un matériau composite à base de fibres, tel qu'un plastique renforcé de fibres de carbone ou similaire, et/ou le deuxième élément d'écartement (16) est constitué d'un matériau composite, en particulier d'un matériau composite à base de fibres, tel qu'un plastique renforcé de fibres de carbone ou similaire.

3. Dispositif optique selon la revendication 1 ou la revendication 2,
**caractérisé en ce que**
un troisième élément d'écartement (18) est prévu, qui est disposé entre la deuxième lentille (6) et le support de fibre optique (8) afin de définir, conjointement avec le deuxième élément d'écartement (16), la deuxième distance (a2) entre la deuxième lentille (6) et le support de fibre optique (8) à l'intérieur du boîtier (10), le troisième élément d'écartement (18) comprenant un matériau présentant un coefficient de dilatation thermique inférieur à celui du matériau du boîtier (10),
dans lequel le troisième élément d'écartement (18) est notamment constitué d'un matériau composite, en particulier d'un matériau composite à base de fibres, tel qu'un plastique renforcé de fibres de carbone ou similaire.

4. Dispositif optique selon la revendication 3,
**caractérisé en ce que**
le deuxième élément d'écartement (16) est disposé entre la deuxième lentille (6) et un épaulement (32) du boîtier (10), et le troisième élément d'écartement (18) est disposé entre le support de fibre optique (8) et l'épaulement (32) du boîtier (10).

5. Dispositif optique selon l'une des revendications précédentes,
**caractérisé en ce que**
le boîtier (10) comporte une première section (34) présentant un premier diamètre de boîtier (d1), à l'intérieur de laquelle sont disposées la première lentille (4) et la deuxième lentille (6), et le boîtier (10) comporte une deuxième section (36) présentant un deuxième diamètre de boîtier (d2), à l'intérieur de laquelle est disposé le support de fibre optique (8), dans lequel le premier diamètre de boîtier (d1) est supérieur au deuxième diamètre de boîtier (d2).

6. Dispositif optique selon les revendications 4 et 5,
**caractérisé en ce que**
l'épaulement (32) assure la transition entre la première section (34) et la deuxième section (36).

7. Dispositif optique selon l'une des revendications précédentes,
**caractérisé en ce que**
la première butée axiale (20) est un écrou vissé dans le boîtier (10),
et/ou
la deuxième butée axiale (26) est un écrou vissé dans le boîtier,
et/ou
le premier élément de compensation (24) est une pièce en matière plastique élastique, telle qu'un joint torique ou similaire,
et/ou
le deuxième élément de compensation (30) est une pièce en matière plastique élastique, telle qu'un joint torique ou un élément similaire.

8. Dispositif optique selon l'une des revendications précédentes,
**caractérisé en ce que**
le premier élément de compensation (20) repose contre la première lentille (4), et/ou
le deuxième élément de compensation (30) repose contre le support de fibre optique (8),
et/ou
le premier élément d'écartement (12) repose contre la première lentille (4) et/ou
le premier élément d'écartement (12) repose contre la deuxième lentille (6) et/ou
le deuxième élément d'écartement (16) repose contre la deuxième lentille (6) et/ou
au moins un élément d'écartement (16, 18) repose contre le support de fibre optique (8).

9. Dispositif optique selon l'une des revendications précédentes,
**caractérisé en ce que**
le boîtier (10) comprend un matériau métallique ou est constitué d'un matériau métallique,
et/ou
le matériau du boîtier (10) présente un coefficient de dilatation thermique supérieur à cinq fois celui du matériau du premier élément d'écartement (12) et/ou du deuxième élément d'écartement (16).

10. Capteur de distance chromatique confocal pour la mesure de distance, comportant une source lumineuse (42),
comportant un dispositif optique (2, 2', 2''),
comportant une fibre optique (44),
comportant un spectromètre (46),
dans lequel le dispositif optique (2, 2', 2'') est relié au spectromètre (46) au moyen de la fibre optique (44),
dans lequel le dispositif optique (2, 2', 2'') est conçu pour focaliser la lumière réfléchie par un objet à mesurer (48) dans la fibre optique (44),
**caractérisé en ce que**
le dispositif optique (2, 2', 2'') est conçu conformément à l'une des revendications 1 à 9 précédentes.

11. Capteur de distance chromatique confocal selon la revendication 10, **caractérisé en ce que**
le boîtier (10) peut être fixé à une structure de support (54) au moyen d'un support (52), ce dernier étant espacé de la première lentille (4) dans la direction axiale.

12. Capteur de distance chromatique confocal selon la revendication 11,
dans lequel le dispositif optique est conçu selon la revendication 5 ou la revendication 6, **caractérisé en ce que** le support (52) repose contre l'épaulement (32).
